(19) Europäisches Patentamt
European Patent Office
Office européen des brevets

(11) **EP 2 540 101 B1**

(12) **EUROPEAN PATENT SPECIFICATION**

(45) Date of publication and mention
of the grant of the patent:
**20.09.2017  Bulletin 2017/38**

(21) Application number: **10846393.6**

(22) Date of filing: **26.02.2010**

(51) Int Cl.:
*H04S 7/00* (2006.01)     *H04R 3/00* (2006.01)
*H04R 5/02* (2006.01)     *H04S 1/00* (2006.01)
*G10L 19/008* (2013.01)   *H04S 3/00* (2006.01)

(86) International application number:
**PCT/FI2010/050145**

(87) International publication number:
**WO 2011/104418 (01.09.2011 Gazette 2011/35)**

(54) **MODIFYING SPATIAL IMAGE OF A PLURALITY OF AUDIO SIGNALS**

VERÄNDERUNG EINES RÄUMLICHEN BILDES VON MEHREREN TONSIGNALEN

MODIFICATION D'IMAGE SPATIALE D'UNE PLURALITÉ DE SIGNAUX AUDIO

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**02.01.2013  Bulletin 2013/01**

(73) Proprietor: **Nokia Technologies Oy
02610 Espoo (FI)**

(72) Inventors:
• **KIRKEBY, Ole
02360 Espoo (FI)**
• **VIROLAINEN, Jussi
02210 Espoo (FI)**

(74) Representative: **Anderson, Oliver Ben et al
Venner Shipley LLP
200 Aldersgate
London EC1A 4HD (GB)**

(56) References cited:
WO-A2-2007/143373     JP-A- 2009 065 609
US-A1- 2007 286 426     US-A1- 2008 004 866
US-A1- 2008 170 703     US-A1- 2009 116 652
US-A1- 2009 136 044     US-A1- 2009 136 044

## Description

### Field of the invention

The present disclosure relates to audio processing, and more particularly to modifying spatial image of a plurality of audio signals.

### Background of the invention

The human auditory system is very good at focusing attention on a sound source according to its position. This is sometimes referred to as the 'cocktail-party effect': in a noisy crowded room it is possible to have a conversation, since the listener can shut out most of the distracting sound coming from directions other than that of the person they are talking to.

It is much harder for a listener to separate sounds that come from the same direction. For example, when listening to stereo music over headphones the sound does not appear to come from a single position but is rather smeared out over a wide sound stage. In that case it is difficult to understand speech, if the voice is superimposed on the music without any attempt to separate the two spatially.

This may imply problems when using, for example, mobile phones. Contemporary mobile terminals include features, which enable to listen to high quality music reproduction via headphones. However, if a phone call is received during music reproduction, either the music is muted or the phone call is superimposed on the music. Consequently, a phone call or a voice message cannot be mixed in with a stereo music track without reducing intelligibility. It is therefore desirable to be able to modify the audio streams spatially so that the speech is easy to understand while the music track is still playing.

US 2007/0286426 discloses audio mixing techniques that create perceptual differentiation between different audio signals.

WO 2007/143373 also discloses audio mixing techniques that create perceptual differentiation between different audio signals.

US 2008/0170703 discloses audio mixing techniques that allow a user to select between two different audio signals for output in a perceptual foreground of a combined output.

US 2009/0136044 discloses a method for providing a distinct perceptual location for an audio source within an audio mixture.

### Summary of the invention

Now there has been invented an improved method and technical equipment implementing the method, by which the intelligibility of speech or any other audio signal is increased when mixed with another audio signal. Various aspects include a method, an apparatus and a computer program, which are characterized by what is stated in the independent claims. Various aspects are disclosed in the dependent claims.

The invention is defined by the claims.

According to a first aspect, a method is based on the idea of modifying a sound stage produced by an input audio signal comprising two or more audio channels such that spatial room is relieved for one or more additional sound sources; and inserting said one or more additional sound sources in the relieved spatial room of the modified sound stage of the input audio signal without introducing spatial interference with the modified sound stage of the input audio signal.

According to an aspect, the input audio signal comprises a two- channel stereo signal, the method further comprising: narrowing the sound stage produced by the two-channel stereo signal by applying an amplitude panning process to input audio signal; and inserting one additional sound source at least on either side of the narrowed sound stage.

According to an aspect, the amplitude panning process is applied to input signal components of said two-channel stereo signal according to

$$\begin{pmatrix} L_{\text{out}} \\ R_{\text{out}} \end{pmatrix} = \begin{pmatrix} 1-\alpha & \alpha \\ \alpha & 1-\alpha \end{pmatrix} \begin{pmatrix} L_{\text{in}} \\ R_{\text{in}} \end{pmatrix}$$

wherein Lin, Lout, Rin and Rout are input and output signal components of left and right stereo channels, respectively, and $0 < \alpha < 0.5$.

According to an aspect, if the one or more additional sound sources are based on speech signals, the value

of $\alpha$ is adjusted to be approximately 0.3 or higher.

According to an aspect, wherein the input audio signal comprises a two-channel stereo signal, the method further comprises: determining a center channel audio component based on audio components common to the stereo signals; narrowing the sound stage produced by the two-channel stereo signal by removing the center channel audio component; and inserting an additional sound source in a non- interfering spatial space between the extremes of the sound stage.

According to an aspect, said removing the center channel audio component and said inserting the additional sound source is performed proportionally to each other according to factors 1 - $\alpha$ and $\alpha$, respectively.

According to an aspect, the value of $\alpha$ is adjusted in a time- varyingly.

According to an aspect, upon determining that an additional sound source should be included in the sound stage produced by the two-channel stereo signal, the method further comprises: increasing the value of $\alpha$ gradually to a predetermined value, such as its maximum value, within a first predetermined period, for example one second.

According to an aspect, the method further comprises: delaying feeding of the additional sound source for said first predetermined period.

According to an aspect, upon determining that no active additional signal producing said additional sound source has been detected for a second predetermined period, the method further comprises: decreasing the value of $\alpha$ gradually to zero.

According to an aspect, the input audio signal comprises Binaural cue coded downmixed signals, the method further comprising: suppressing audio signals arriving from at least one virtual audio source by selecting sub-bands having inter-channel time difference parameters within a predetermined range to be suppressed; and inserting said one or more additional sound sources in the Binaural cue coded downmixed signals instead of said suppressed audio signals.

According to an aspect, the input audio signal comprises Directional audio coded signals, the method further comprising: suppressing audio signals arriving from at least one virtual audio source by selecting sub-bands having azimuth and/or elevation parameters within a predetermined range to be suppressed; and inserting said one or more additional sound sources in the Directional audio coded signals instead of said suppressed audio signals.

According to an aspect, the input audio signal comprises Directional audio coded (DirAC) signals or Binaural cue coded (BCC) downmixed signals, the method further comprising: applying a repanning process to said input audio signal in order to re-allocate energy of one or more predefined DirAC or BCC signals to new spatial positions; and inserting said one or more additional sound sources in the spatial positions relieved by said one or more predefined DirAC or BCC signals.

The arrangement according to the present disclosure provides many advantages. It enables to include one or more additional sound sources based on audio signals, e.g. speech signals, in a sound stage produced by an original input audio signal(s) such that the additional sound sources are intelligible even if the original audio signal(s), e.g. stereo music, belonging to the sound stage are still reproduced. Especially in a case of a stereo sound stage, there is provided straightforward methods for relieving non-interfering spatial room for one or two speech signals to be intelligibly mixed with the underlying sound stage. This provides an entertaining feature, for example, for social music services, wherein a push-to-talk feature could be available on a "Now listening to" page so that user's friends could instantaneously comment on the listened music.

According to a second aspect, there is provided an apparatus comprising at least one processor and at least one memory storing computer program code, wherein the at least one memory and stored computer program code are configured to, with the at least one processor, cause the apparatus to at least: modify a sound stage produced by an input audio signal comprising two or more audio channels such that spatial room is relieved for one or more additional sound sources; and insert said one or more additional sound sources in the relieved spatial room of the modified sound stage of the input audio signal without introducing spatial interference with the modified sound stage of the input audio signal.

According to a third aspect, there is provided a computer program product, stored on a computer readable medium and executable in a data processing device, for processing audio signals, the computer program product comprising: a computer program code section for modifying a sound stage produced by an input audio signal comprising two or more audio channels such that spatial room is relieved for one or more additional sound sources; and a computer program code section for inserting said one or more additional sound sources in the relieved spatial room of the modified sound stage of the input audio signal without introducing spatial interference with the modified sound stage of the input audio signal.

These and other aspects will become apparent in view of the detailed disclosure further below.

**List of drawings**

In the following, various embodiments of the invention will be described in more detail with reference to the appended drawings, in which

Figs. 1a, 1b show how the listener may perceive the spatial properties of stereo music when played back over headphones, without spatial processing and with spatial processing, respectively;

Fig. 2a shows a stereo widened sound stage;

Fig. 2b shows how the stereo widened sound stage of Figure 2a is narrowed in order to make room for an additional signal;

Fig. 3 shows a reduced block diagram for the processing components required to produce the spatial effect of Figure 2b according to an embodiment;

Fig. 4a shows the principle of a center channel common audio component for a stereo signal;

Fig. 4b shows how the sound stage of Figure 4a is narrowed by removing the center channel common audio component in order to make room for an additional signal;

Fig. 5 shows a reduced block diagram for the processing components required to produce the spatial effect of Figure 4b according to an embodiment;

Figs. 6a, 6b illustrate a repanning-based embodiment for relieving spatial room between a plurality of virtual audio sources; and

Fig. 7 shows a reduced block chart of an apparatus according to an embodiment.

## Description of embodiments

In the following, the invention will be illustrated by referring to (stereo) music as the source material, wherein spatial room is created for the insertion of an additional sound source based on a speech signal. It is, however, noted that the invention is not limited to music as the source material solely, but it can be implemented in any type of multi-channel audio with spatial content, including movie sound tracks, TV broadcasts, and games. Furthermore, the speech signals can be replaced by other types of material that take priority over the spatial sound track, for example UI sounds and alerts.

The first implementation examples are described on the basis of two-channel (stereo) input audio signal, but the basic aspects are applicable to multi-channel input audio signal as well, as illustrated in the implementation examples further below. It is also generally known that the sound stage created by a stereo signal can be modified in such a way that the listener perceives the sound stage as extending beyond the positions of the speakers at both sides. This process is generally referred to as stereo widening, wherein the widening effect is typically created by introducing cross-talk from the left input to the right loudspeaker, and from the right input to the left loudspeaker. There are known stereo widening schemes for both loudspeaker playback and headphone playback.

In the following, headphone playback is used as an example but the principle is the same with two closely spaced loudspeakers. In both cases, the positions of the sound sources can be assumed to be distributed along a line, or arc, extending from the left to the right relative to the listener, symmetrically around the median plane, in a way similar to what is experienced when sitting in front of a conventional stereo setup where the loudspeakers span an angle of 60 degrees as seen by the listener.

In the enclosed figures, the head of the listener is depicted from above, the triangle denoting the listener's nose and the two hemispheres denoting listener's ears, and the sound stage perceived by the listener is depicted by the area of the ellipsis.

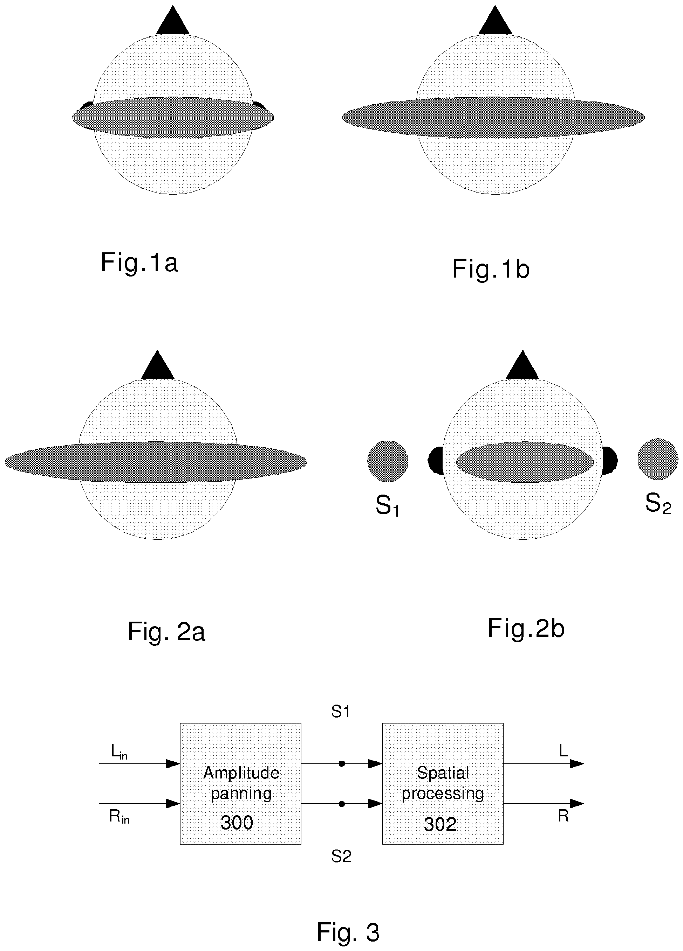

Figures 1 a and 1b show how the listener may perceive the spatial properties of stereo music when played back over headphones. Without spatial processing (Figure 1a), all sound sources of the sound stage extend from the left ear to the right ear across the center of the head. With a spatial effect created by the stereo widening (Figure 1b), the extremes of the sound stage are externalised so that some sound sources appear to be heard outside the head. Regardless of whether spatial processing is used or not, the sound stage (i.e. the spatial image) of a typical stereo music track is dense, with no gaps in which to squeeze in an additional sound source. This is depicted by the solid ellipsis area.

Now according to an embodiment applicable particularly to stereo signals, the spatial image of the original stereo input signal is modified such that spatial room is relieved for one or more additional audio sound sources, based on e.g. one or more additional signals, in such a way that the one or more additional sound sources may be inserted in the relieved spatial room without introducing spatial interference with the modified spatial image of the original stereo signal. Thus, by relieving spatial room from the original sound stage comprising e.g. music, it is possible to include contents of one or more additional audio signals, e.g. speech signals, in the sound stage of the original two-channel stereo signal as additional sound sources such that the additional sound sources are intelligible even if the stereo signal, e.g. music, is still reproduced.

According to an embodiment, the sound stage is narrowed so that there is room in the spatial image for additional (e.g. speech) signals on both sides. Stereo widening has little or no effect on stereo signals in a case when the audio in the left channel, L, is identical to the right, R. Consequently, the sound stage can be narrowed artificially by mixing the left and right channels together so that the two channels of the stereo signal that are input to the stereo widening network are more similar than in the original recording. This is a standard operation usually referred to as amplitude panning. Control of the width of the sound stage is achieved when amplitude panning is applied to both channels according to

$$\begin{pmatrix} L_{\text{out}} \\ R_{\text{out}} \end{pmatrix} = \begin{pmatrix} 1\text{-}\alpha & \alpha \\ \alpha & 1\text{-}\alpha \end{pmatrix} \begin{pmatrix} L_{\text{in}} \\ R_{\text{in}} \end{pmatrix}, \tag{1}$$

where $\alpha$ is a parameter that varies between 0 - 0.5. As seen in the equation (1), when $\alpha =0$, there is no effect on the stereo input; i.e. $L_{\text{out}} = L_{\text{in}}$ and $R_{\text{out}}=R_{\text{in}}$. Likewise, when $\alpha = 0.5$, the two output signals are made identical; i.e. $L_{\text{out}}=R_{\text{out}}=0.5*L_{\text{in}} + 0.5*R_{\text{in}}$. The experiments have shown that when a value of $\alpha$ becomes greater than approximately 0.3, the sound stage of an average stereo signal is narrowed enough in order to add a speech signal on both the left and right side of the listener. This enables e.g. two callers, or voice messages, to be heard simultaneously and yet intelligibly with the underlying audio signal of the sound stage.

This is illustrated in Figures 2a and 2b, wherein the (stereo widened) sound stage of Figure 2a is narrowed in order to make room for speech signals $S_1$ and $S_2$ on both sides of the listener.

It is to be noted that depending on the nature of the additional audio signal (e.g. a non-speech signal) to be added as a sound source to the sound stage, it may be possible to add one or more additional sound sources on one or both sides of the listener with significantly smaller value of $\alpha$ than 0.3. For some type of additional audio signals, for example various alerts or user interface sounds, even a value of $\alpha$ less than 0.1 may be sufficient.

Figure 3 shows an embodiment of an exemplified block diagram for the processing components required to produce the spatial effect of Figure 2b. First the two stereo input channels $L_{\text{in}}$ and $R_{\text{in}}$ are fed in an amplitude panning unit 300, which controls the amplitude panning process by the value of $\alpha$ as described above. With the suitable value of $\alpha$, the sound stage output from the amplitude panning unit 300 is narrowed enough so as to insert an additional sound source based on audio signals S1, S2 on one or both sides of the narrowed sound stage. The narrowed sound stage produced from the two stereo input channels $L_{\text{in}}$ and $R_{\text{in}}$ and the one or two additional sound sources based on audio signals S1, S2 are then fed into the spatial processing unit 302. The spatial processing unit 302 then creates a 3-D spatial audio image, manifested by the left L and right R audio signals, to be reproduced via headphone playback.

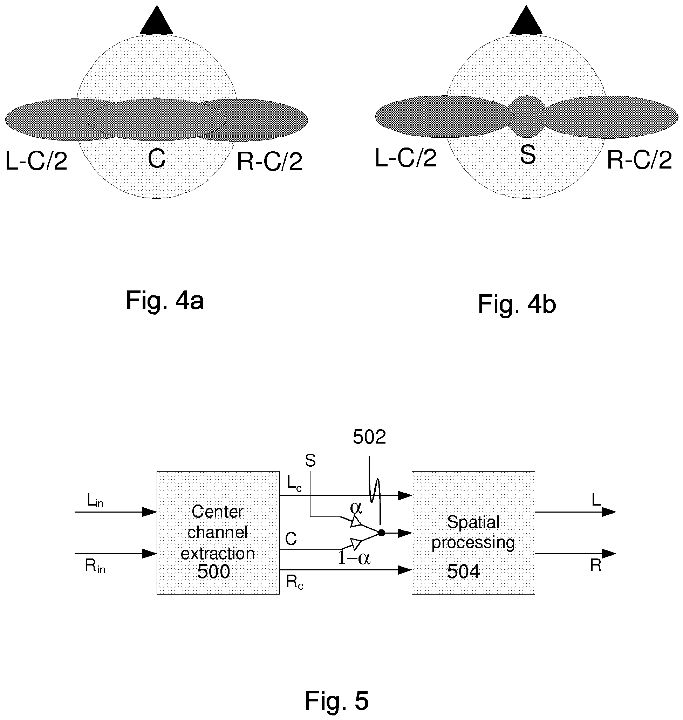

According to another embodiment, the sound stage can be narrowed by making room in the middle of the sound stage. A sound source based on e.g. a speech signal can be added in the middle of the sound stage, instead of at one of the sides, by subtracting out the component common to the two channels in the stereo input. Figure 4a illustrates an example, wherein the common component C of a sound stage has been determined according to a center channel extraction algorithm. There are many known algorithms available for center channel extraction, and they are typically dependent on the used surround sound process. In the sound stage, the left ear component L-C/2 and the right ear component R-C/2 are at least partly overlapping with the center channel (common component) C. Typically, the center channel extraction cannot be made perfectly, and in order to avoid processing artifacts, it is preferable to allow the common component to be relatively wide (as shown in Figure 4a) by adjusting the parameters of the center channel extraction algorithm appropriately.

As seen in Figure 4a, the result of the application of the center channel extraction algorithm is that the left ear component L-C/2 and the right ear component R-C/2 are not spatially interfering each other, but there is spatial room between them, if the center channel (common) component C is removed. This is illustrated in Figure 4b, wherein the sound stage is narrowed by dividing it into two parts L-C/2 and R-C/2 having spatial room there between, whereby an additional audio signal S can be inserted as an additional sound source to the sound stage without spatial interference with the modified spatial image of the original stereo signal while still allowing the additional audio signal to be intelligibly heard.

According to an embodiment, it is preferable to limit the number of simultaneously appearing sound sources to one, since typically there is room for only a single additional sound source in the center of the sound stage. For instance in case of the additional sound sources are based on speech signals, if several people are speaking at the same time, it is difficult to identify the active talker, i.e. the phenomenon familiar with the conventional teleconferencing equipment with mono playback.

Figure 5 shows an embodiment of an exemplified block diagram for the processing components required to produce the spatial effect of Figure 4b. First the two stereo input channels $L_{in}$ and $R_{in}$ are fed in a center channel extraction unit 500, which produces output signal components $L_c$, C and $R_c$ representing substantially the sound stage illustrated in Figure 4a. The mutually non-interfering left-ear component $L_c$ and right-ear component $R_c$ are fed into a spatial processing unit 504 as such, but the center channel (common) component C is multiplied by 1-$\alpha$ and the additional audio signal S is, in turn, multiplied by $\alpha$ before feeding the both signals into a summing unit 502. Thus, by adjusting the value of $\alpha$, it can be determined whether the center channel component C, the additional sound source based on the audio signal S or a mix of said signals C and S in fed into the spatial processing unit 504. The spatial processing unit 504 then creates a 3-D spatial audio image, manifested by the left L and right R audio signals, to be reproduced via headphone playback.

A skilled person immediately appreciates that the spatial processing method applied by the spatial processing units 302 in Figure 3 and 504 in Figure 5 may vary depending on the application used. Moreover, since the basic aspects are applicable in loudspeaker playback as well, the spatial processing method applied in loudspeaker playback is preferably different than in headphones playback. Thus, the applied spatial processing method as such is not relevant for embodiments described herein.

In the above embodiments of narrowing the sound stage, if there is no additional sound source(s) based on audio signal(s) S to be included, the spatial content of the original audio signal, e.g. music, is perceived by the listener in a reduced and thus in an unsatisfactory manner. Therefore, it is advantageous to modify the sound stage and make room for an additional sound source only when additional signal(s) with audible content is/are present, e.g. in case an additional signal based on which an additional sound source is to be introduced is a speech signal, the sound stage may be modified to make room for the additional sound source only when there is voice activity in the respective signal.

According to an embodiment, this is implemented by making the parameter $\alpha$ time-varying. In the embodiments described in Figures 3 and 5, when $\alpha$ =0, there is no room for an additional sound source in the sound stage and the speech channel(s) S based on which additional sound source(s) is/are to be introduced are muted. According to an embodiment, upon determining that an additional sound source should be included in the sound stage, the value of $\alpha$ is gradually increased to a predetermined value providing desired width of sound stage for the original audio signal within a first predetermined period, for example one second. Thereby, a pleasant and entertaining spatial effect is achieved. It should be noted that the maximum value of $\alpha$ is 0.5 for the narrowing of the sound stage and 1 for removing the center channel

According to a further embodiment, feeding of the additional sound source(s) based on signal(s) S is/are delayed by the same (first) predetermined period as it takes to increase $\alpha$ to the predetermined value. This enables to modify the sound stage before the additional sound source, e.g. speech, is heard.

According to an embodiment, when there has been no active additional signal for a second predetermined period, for example five seconds, then the value of $\alpha$ is reduced to zero again using the same gradual update scheme as when it is increased, but naturally in a reversed manner.

The above embodiments have been described in view of two-channel (stereo) input audio signal, but as mentioned above, the basic aspects are applicable to multi-channel input audio signal as well. A skilled person is aware that there are different ways to implement the spatial processing, and for example stereo widening may be considered merely a special case that works on a two-channel input.

Thus, the basic aspect of the embodiments can be generalized as controlling the spatial image of an input audio signal comprising two or more audio channels such that spatial room is relieved for one or more additional sound sources, based on e.g. one or more additional audio signals, in such a way that the one or more additional sound sources may be inserted in the relieved spatial room without introducing spatial interference with the modified spatial image of the original input signal, and inserting said one or more additional sound sources in the relieved spatial room of the modified spatial image of the input audio signal. Thus, also in the case of multi-channel input audio having more than two channels it is possible to insert one or more additional sound sources into the sound stage such that the additional sound source (s) are intelligible even if the multi-channel audio signal(s) are still reproduced.

A number of audio processing algorithms, referred to as 'virtual surround', utilize the properties of the human auditory system to create the perception that the sound stage is created by more audio sources than are actually present. These algorithms may be based on the utilization of head-related transfer functions (HRTFs), parametric audio coding techniques like Binaural Cue Coding (BCC), reflections or diffuse sound sources or a combination of those. Many of these algorithms may include, at least in some stage of the processing, more than two channel signals.

In Binaural cue coding (BCC) the encoder transforms input signals into the frequency domain using for example the Fourier transform or QMF filterbank techniques, and then performs spatial analysis. Inter-channel level difference (ILD) and time difference (ITD) parameters as well as additional parameters are estimated for each frequency sub-band in each input frame. These parameters are transmitted as side information along with a downmixed audio signal that is created by combining the input signals.

In Directional Audio coding (DirAC) the signals from spatial microphone system, such as the B-format SoundField microphone, are analysed by dividing the input signals into frequency bands. Direction-of-arrival and the diffuseness are estimated individually for each time instance and frequency band. The spatial side information which consists of azimuth, elevation, and diffuseness values for each frequency band are transmitted with omnidirectional microphone signal.

According to an embodiment, if the audio signal is already BCC or DirAC coded, it is possible to suppress sounds that are coming from certain (virtual) spatial direction(s). For example, from N spatial directions, one or two spatial directions could be suppressed to make room for one or more additional sound source (s) to be mixed therein, and the additional sound sources based on e.g. additional audio signal(s) may then be inserted instead of the suppressed virtual audio sources. In practise, this can be implemented by manipulating the side information in the parametric domain. For example, in BCC coded signals sub-bands that have ITD at certain range can be suppressed. In DirAC coded signals, sub-bands having certain azimuth and/or elevation values can be suppressed.

Repanning is an audio processing method, basically applied to stereo music tracks, which maps energy in a specific spatial position to new spatial position. According to an embodiment, repanning is applied for BCC or DirAC coded signals. Thus, by re-allocating energy of certain BCC or DirAC coded signals to new spatial positions, spatial room may be relieved from the sound stage allowing one or more additional sound sources to be included in the sound stage, while still preserving substantially all content in the original signal.

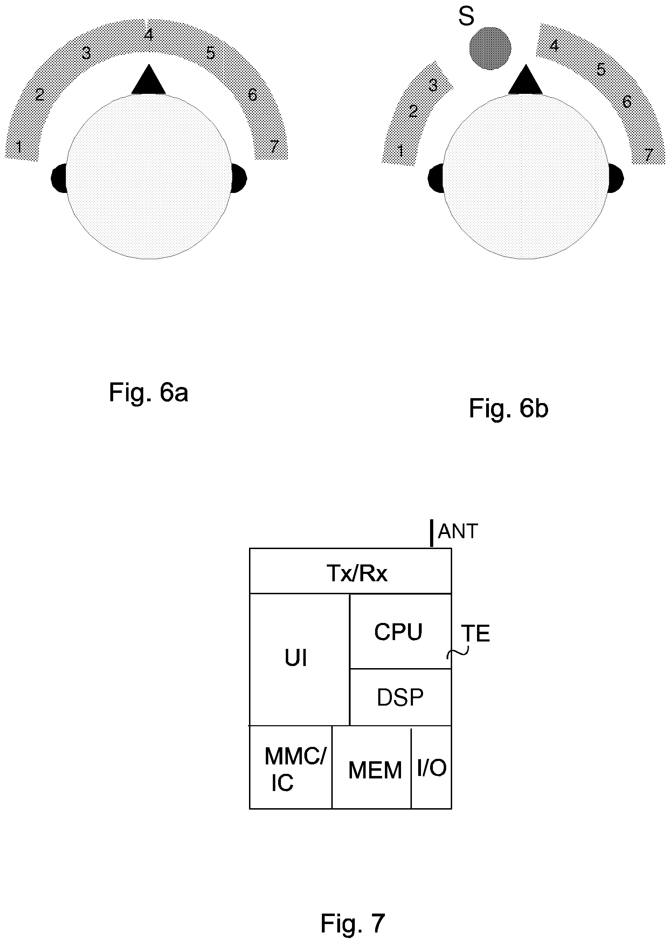

The principle of this embodiment is illustrated in Figures 6a and 6b. In Figure 6a, the virtual audio sources of the sound stage, denoted by numbers 1 to 7, are equally distributed in the sound stage. In Figure 6b, as a result of the repanning process, the virtual audio sources 1 to 3 and 4 to 7, respectively, are squeezed together and pulled apart into two groups in order to make room for an additional audio signal S slightly to the left of the listener.

The process for making spatial room through repanning is described more in detail in the patent application publication US2008/0298610, "Parameter Space Re-Panning for Spatial Audio".

According to an embodiment, the sound stage is not limited to be located in front/sides of the listener, but it can also extend behind the listener, if an advanced rendering technology, for example with head- tracking, is used.

A skilled man appreciates that any of the embodiments described above may be implemented as a combination with one or more of the other embodiments, unless there is explicitly or implicitly stated that certain embodiments are only alternatives to each other.

Figure 7 illustrates a simplified structure of an apparatus, i.e. a data processing device (TE), wherein the sound stage modifying method according to the embodiments can be implemented. The data processing device (TE) can be, for example, a mobile terminal, a PDA device or a personal computer (PC). The data processing unit (TE) comprises I/O means (I/O), a central processing unit (CPU) and memory (MEM). The memory (MEM) comprises a read-only memory ROM portion and a rewriteable portion, such as a random access memory RAM and FLASH memory. The information used to communicate with different external parties, e.g. a CD-ROM, other devices and the user, is transmitted through the I/O means (I/O) to/from the central processing unit (CPU). If the data processing device is implemented as a mobile station, it typically includes a transceiver Tx/Rx, which communicates with the wireless network, typically with a base transceiver station (BTS) through an antenna (ANT). User Interface (UI) equipment typically includes a display, a keypad, a microphone and connecting means for headphones. The data processing device may further comprise connecting means MMC, such as a standard form slot, for various hardware modules or as integrated circuits IC, which may provide various applications to be run in the data processing device.

Accordingly, the sound stage modifying method according to the embodiments may be executed in a central processing unit CPU or in a dedicated digital signal processor DSP (a parametric code processor) of the data processing device, and in at least one memory MEM storing computer program code, wherein the at least one memory and stored computer program code are configured to, with the at least one processor, cause the apparatus to at least modify a spatial image of two or more audio signals such that spatial room is relieved for one or more additional audio signals, which spatial room has no spatial interference between said two or more audio signals and insert said one or more additional audio signals in the relieved spatial room of the spatial image of the two or more audio signals.

Thus, the functionalities of the embodiments may be implemented in an apparatus, such as a mobile station, as a computer program which, when executed in a central processing unit CPU or in a dedicated digital signal processor DSP, affects the terminal device to implement procedures of the invention. Functions of the computer program SW may be distributed to several separate program components communicating with one another. The computer software may be stored into any memory means, such as the hard disk of a PC or a CD-ROM disc, from where it can be loaded into the memory of mobile terminal. The computer software can also be loaded through a network, for instance using a TCP/IP protocol stack.

It is also possible to use hardware solutions or a combination of hardware and software solutions to implement the inventive means. Accordingly, the above computer program product can be at least partly implemented as a hardware solution, for example as ASIC or FPGA circuits, in a hardware module comprising connecting means for connecting the module to an electronic device, or as one or more integrated circuits IC, the hardware module or the ICs further including various means for performing said program code tasks, said means being implemented as hardware and/or software.

It is obvious that the present invention is not limited solely to the above-presented embodiments, but it can be modified within the scope of the appended claims.

**Claims**

1.  A method comprising:

    controlling a sound stage produced by an input audio signal comprising a multi-channel signal ($L_{in}$, $R_{in}$) to modify a spatial extent of the sound stage such that spatial room is created for insertion of one or more additional sound sources ($S_1$, $S_2$, S), the sound stage being controlled to modify the spatial extent of the sound stage by applying an amplitude panning process to the input audio signal or by determining a center channel audio component (C) based on audio components common to the multi-channel signals and removing the center channel audio component; and

    inserting said one or more additional sound sources into the created spatial room without introducing spatial interference with the controlled sound stage of the input audio signal.

2.  The method according to claim 1, wherein the input audio signal comprises a two-channel stereo signal and wherein the amplitude panning process comprises mixing the left and right channels of the stereo signal together so that the similarity between the left and right channels is increased.

3.  The method according to claim 2, wherein the spatial extent of the sound stage is modified such that an additional signal can be inserted on either side of the controlled sound stage.

4.  The method according to claim 1, wherein said removing the center channel audio component (C) and said inserting the additional sound source (S) is performed proportionally to each other.

5.  The method of claim 1, wherein, when controlling the sound stage to modify the spatial extent of the sound stage comprises narrowing the sound stage by applying the amplitude panning process to the input audio signal, inserting the one or more additional sound sources comprises inserting a sound source ($S_1$, $S_2$) of said one or more additional sound sources at least on one side of the narrowed sound stage.

6.  The method of claim 1, wherein, when controlling the sound stage to modify the spatial extent of the sound stage comprises determining the center channel audio component (C) based on audio components common to the multi-channel signals and removing the center channel audio component, inserting the one or more additional sound sources comprises inserting a sound source (S) of said one or more additional sound sources in the spatial room from which the center channel components were removed.

7.  The method according to claim 1, wherein the input audio signal comprises Directional audio coded (DirAC) signals or Binaural cue coded (BCC) downmixed signals, and wherein controlling the sound stage to modify the spatial extent of the sound stage comprises applying a repanning process to said input audio signal in order to re-allocate energy of one or more predefined DirAC or BCC signals to new spatial positions, and
    wherein inserting said one or more additional sound sources into the spatial room created comprises inserting said one or more additional sound sources into the spatial positions from which the energy of the one or more predefined DirAC or BCC signals was re-allocated.

8.  An apparatus comprising at least one processor and at least one memory storing computer program code, wherein the at least one memory and stored computer program code are configured to, with the at least one processor, cause the apparatus to:

    control a sound stage produced by an input audio signal comprising a multi-channel signal ($L_{in}$, $R_{in}$) to modify a spatial extent of the sound stage such that spatial room is created for insertion of one or more additional sound sources ($S_1$, $S_2$, S), the sound stage being controlled to modify the spatial extent of the sound stage by applying an amplitude panning process to the input audio signal or by determining a center channel audio component (C) based on audio components common to the multi-channel signals and removing the center channel audio component; and
    insert said one or more additional sound sources into the created spatial room without introducing spatial interference with the controlled sound stage of the input audio signal.

9. The apparatus according to claim 8, wherein the input audio signal comprises a two-channel stereo signal and wherein the amplitude panning process comprises mixing the left and right channels of the stereo signal together so that the similarity between the left and right channels is increased.

10. The apparatus according to claim 9, wherein the spatial extent of the sound stage is modified such that an additional signal can be inserted on either side of the controlled sound stage.

11. The apparatus according to claim 8, wherein said removing the center channel audio component (C) and said inserting the additional sound source (S) are arranged to be performed proportionally to each other.

12. The apparatus according to claim 11, wherein mixing the left and right channels of the stereo signal together is performed time-varyingly.

13. The apparatus according to claim 12, wherein upon determining that an additional sound source ($S_1$, $S_2$, S) should be inserted into the sound stage produced by the two-channel stereo signal ($L_{in}$, $R_{in}$), the at least one memory and stored computer program code are further configured to, with the at least one processor, cause the apparatus to at least:

   mix the left and right channels of the stereo signal together time-varyingly within a first predetermined period, for example one second.

14. A computer program product, stored on a computer readable medium and executable in a data processing device, for processing audio signals, the computer program product comprising:

   computer program code for carrying out the method according to any one of claims 1 to 7.


**Patentansprüche**

1. Verfahren, das Folgendes umfasst:

   Steuern eines Klangbilds, das durch ein Eingangsaudiosignal erzeugt wird, das ein Multikanalsignal ($L_{in}$, $R_{in}$) umfasst, um eine räumliche Ausdehnung des Klangbilds derart zu ändern, dass ein räumlicher Platz zum Einfügen einer oder mehrerer zusätzlicher Klangquellen ($S_1$, $S_2$, S) erzeugt wird, wobei das Klangbild durch Anwenden eines Amplituden-Panning-Verfahrens auf das Eingangsaudiosignal oder durch Bestimmen einer Mittelkanalaudiokomponente (C) anhand von Audiokomponenten, die den Multikanalsignalen gemeinsam sind, und Entfernen der Multikanalaudiokomponenten gesteuert wird, um die räumliche Ausdehnung des Klangbilds zu ändern; und
   Einfügen der einen oder der mehreren zusätzlichen Klangquellen in den erzeugten räumlichen Platz ohne eine räumliche Interferenz mit dem gesteuerten Klangbild des Eingangsaudiosignals einzuführen.

2. Verfahren nach Anspruch 1, wobei das Eingangsaudiosignal ein Zweikanalstereosignal umfasst und wobei das Amplituden-Panning-Verfahren umfasst, den linken und den rechten Kanal des Stereosignals miteinander zu mischen, so dass die Ähnlichkeit zwischen dem linken und dem rechten Kanal erhöht wird.

3. Verfahren nach Anspruch 2, wobei die räumliche Ausdehnung des Klangbilds derart geändert wird, dass ein zusätzliches Signal auf beiden Seiten des gesteuerten Klangbilds eingefügt werden kann.

4. Verfahren nach Anspruch 1, wobei das Entfernen der Mittelkanalaudiokomponente (C) und das Einfügen der zusätzlichen Klangquelle (S) proportional zueinander ausgeführt werden.

5. Verfahren nach Anspruch 1, wobei dann, wenn das Steuern des Klangbilds, um die räumliche Ausdehnung des Klangbilds zu ändern, umfasst, das Klangbild durch Anwenden des Amplituden-Panning-Verfahrens auf das Eingangsaudiosignal zu schmälern, das Einfügen der einen oder der mehreren zusätzlichen Klangquellen umfasst, eine Klangquelle ($S_1$, $S_2$) der einen oder der mehreren zusätzlichen Klangquellen zumindest auf einer Seite des geschmälerten Klangbilds einzufügen.

6. Verfahren nach Anspruch 1, wobei dann, wenn das Steuern des Klangbilds, um die räumliche Ausdehnung des Klangbilds zu ändern, umfasst, die Mittelkanalaudiokomponente (C) anhand von Audiokomponenten, die den Multikanalsignalen gemeinsam sind, zu bestimmen und die Mittelkanalaudiokomponente zu entfernen, das Einfügen der einen oder der mehreren zusätzlichen Klangquellen umfasst, eine Klangquelle (S) der einen oder der mehreren zusätzlichen Klangquellen in den räumlichen Platz einzufügen, aus dem die Mittelkanalkomponenten entfernt wurden.

7. Verfahren nach Anspruch 1, wobei das Eingangsaudiosignal gerichtete audiocodierte Signale (DirAC-Signale) oder binaural hinweiscodierte heruntergemischte Signale (heruntergemischte BCC-Signale) umfasst und wobei das Steuern des Klangbilds, um die räumliche Ausdehnung des Klangbilds zu ändern, umfasst, ein Repanning-Verfahren auf das Eingangsaudiosignal anzuwenden, um eine Energie eines oder mehrerer vordefinierter DirAC- oder BCC-Signale neuen räumlichen Positionen neu zuzuweisen, und
wobei das Einfügen der einen oder der mehreren Klangquellen in den erzeugten räumlichen Platz umfasst, die eine oder die mehreren zusätzlichen Klangquellen in die räumlichen Positionen einzufügen, von denen die Energie des einen oder der mehreren vordefinierten DirAC- oder BCC-Signale neu zugewiesen wurde.

8. Vorrichtung, die mindestens einen Prozessor und einen Speicher, der einen Computerprogrammcode speichert, umfasst, wobei der mindestens eine Speicher und der gespeicherte Computerprogrammcode konfiguriert sind, mit dem mindestens einen Prozessor zu bewirken, dass die Vorrichtung:

ein durch ein Eingangsaudiosignal, das ein Multikanalsignal ($L_{in}$, $R_{in}$) umfasst, erzeugtes Klangbild steuert, um eine räumliche Ausdehnung des Klangbilds derart zu ändern, dass ein räumlicher Platz für ein Einfügen einer oder mehrerer zusätzlicher Klangquellen ($S_1$, $S_2$, S) erzeugt wird, wobei das Klangbild durch Anwenden eines Amplituden-Panning-Verfahrens auf das Eingangsaudiosignal oder durch Bestimmen einer Mittelkanalaudiokomponente (C) anhand von Audiokomponenten, die den Multikanalsignalen gemeinsam sind, und Entfernen der Mittelkanalaudiokomponente gesteuert wird, um die räumliche Ausdehnung des Klangbilds zu ändern; und eine oder mehrere zusätzliche Klangquellen in den erzeugten räumlichen Platz einfügt, ohne eine räumliche Interferenz mit dem gesteuerten Klangbild des Eingangsaudiosignals einzuführen.

9. Vorrichtung nach Anspruch 8, wobei das Eingangsaudiosignal ein Zweikanalstereosignal umfasst und wobei das Amplituden-Panning-Verfahren umfasst, den linken und den rechten Kanal des Stereokanals zusammen zu mischen, so dass die Ähnlichkeit zwischen dem linken und dem rechten Kanal erhöht wird.

10. Vorrichtung nach Anspruch 9, wobei die räumliche Ausdehnung des Klangbilds derart geändert wird, dass ein zusätzliches Signal auf beiden Seiten des gesteuerten Klangbilds eingefügt werden kann.

11. Vorrichtung nach Anspruch 8, wobei das Entfernen der Mittelkanalaudiokomponente (C) und das Einfügen der zusätzlichen Klangquelle (S) ausgelegt sind, proportional zueinander ausgeführt zu werden.

12. Vorrichtung nach Anspruch 11, wobei das Zusammenmischen des linken und des rechten Kanals des Stereosignals zeitvariierend ausgeführt wird.

13. Vorrichtung nach Anspruch 12, wobei beim Bestimmen, dass eine zusätzliche Klangquelle ($S_1$, $S_2$, S) in das Klangbild eingefügt werden sollte, das durch das Zweikanalstereosignal ($L_{in}$, $R_{in}$) erzeugt wird, der mindestens eine Speicher und der gespeicherte Computerprogrammcode ferner konfiguriert sind, mit dem mindestens einen Prozessor zu bewirken, dass die Vorrichtung mindestens:

den linken und den rechten Kanal des Stereosignals zeitvariierend innerhalb einer ersten vorgegebenen Periode, zum Beispiel einer Sekunde, zusammenmischt.

14. Computerprogrammprodukt, das auf einem computerlesbaren Medium gespeichert ist und in einer Datenverarbeitungsvorrichtung ausführbar ist, um Audiosignale zu verarbeiten, wobei das Computerprogrammprodukt umfasst:

Computerprogrammcode zum Ausführen des Verfahrens nach einem der Ansprüche 1 bis 7.

**Revendications**

1. Procédé, comprenant les étapes suivantes :

ajustement d'une scène sonore produite par un signal audio d'entrée comprenant un signal multicanal ($L_{in}$, $R_{in}$) aux fins de modifier une étendue spatiale de la scène sonore de façon à créer de la place spatiale pour l'insertion d'une ou de plusieurs sources sonores additionnelles ($S_1$, $S_2$, S), la scène sonore étant ajustée aux fins de modifier l'étendue spatiale de la scène sonore par application d'un processus dit de panning d'amplitude au signal audio d'entrée ou par détermination d'une composante audio de canal central (C) sur la base de composantes audio communes aux signaux multicanaux et suppression de la composante audio de canal central ; et insertion desdites une ou plusieurs sources sonores additionnelles dans la place spatiale créée sans introduire d'interférence spatiale avec la scène sonore ajustée du signal audio d'entrée.

2.  Procédé selon la revendication 1, dans lequel le signal audio d'entrée comprend un signal stéréo bicanal, et dans lequel le processus de panning d'amplitude comprend le mixage des canaux gauche et droit du signal stéréo de façon à accroître la similarité entre les canaux gauche et droit.

3.  Procédé selon la revendication 2, dans lequel l'étendue spatiale de la scène sonore est modifiée de façon à permettre l'insertion d'un signal additionnel de chaque côté de la scène sonore ajustée.

4.  Procédé selon la revendication 1, dans lequel ladite suppression de la composante audio de canal central (C) et ladite insertion de la source sonore additionnelle (S) sont réalisées proportionnellement l'une à l'autre.

5.  Procédé selon la revendication 1, dans lequel, lorsque l'ajustement de la scène sonore aux fins de modifier l'étendue spatiale de la scène sonore comprend le resserrement de la scène sonore par application du processus de panning d'amplitude au signal audio d'entrée, l'insertion desdites une ou plusieurs sources sonores additionnelles comprend l'insertion d'une source sonore ($S_1$, $S_2$) parmi lesdites une ou plusieurs sources sonores additionnelles au moins d'un côté de la scène sonore resserrée.

6.  Procédé selon la revendication 1, dans lequel, lorsque l'ajustement de la scène sonore aux fins de modifier l'étendue spatiale de la scène sonore comprend la détermination de la composante audio de canal central (C) sur la base de composantes audio communes aux signaux multicanaux et la suppression de la composante audio de canal central, l'insertion desdites une ou plusieurs sources sonores additionnelles comprend l'insertion d'une source sonore (S) parmi lesdites une ou plusieurs sources sonores additionnelles dans la place spatiale de laquelle les composantes de canal central ont été supprimées.

7.  Procédé selon la revendication 1, dans lequel le signal audio d'entrée comprend des signaux à codage audio directionnel (DirAC) ou des signaux à codage d'indices binauraux (BCC) soumis à un mixage réducteur, et dans lequel l'ajustement de la scène sonore aux fins de modifier l'étendue spatiale de la scène sonore comprend l'application d'un processus dit de repanning audit signal audio d'entrée dans le but de réallouer l'énergie d'un ou de plusieurs signaux DirAC ou BCC prédéfinis à de nouvelles positions spatiales, et
dans lequel l'insertion desdites une ou plusieurs sources sonores additionnelles dans la place spatiale créée comprend l'insertion desdites une ou plusieurs sources sonores additionnelles dans les positions spatiales desquelles l'énergie desdits un ou plusieurs signaux DirAC et BCC prédéfinis a été réallouée.

8.  Appareil comprenant au moins un processeur et au moins une mémoire dans laquelle est enregistré un code de programme d'ordinateur, dans lequel l'au moins une mémoire et l'au moins un code de programme d'ordinateur enregistré sont configurés pour, à l'aide de l'au moins un processeur, amener l'appareil à :

    ajuster une scène sonore produite par un signal audio d'entrée comprenant un signal multicanal ($L_{in}$, $R_{in}$) aux fins de modifier une étendue spatiale de la scène sonore de façon à créer de la place spatiale pour l'insertion d'une ou de plusieurs sources sonores additionnelles ($S_1$, $S_2$, S), la scène sonore étant ajustée aux fins de modifier l'étendue spatiale de la scène sonore par application d'un processus dit de panning d'amplitude au signal audio d'entrée ou par détermination d'une composante audio de canal central (C) sur la base de composantes audio communes aux signaux multicanaux et suppression de la composante audio de canal central ; et insérer lesdites une ou plusieurs sources sonores additionnelles dans la place spatiale créée sans introduire d'interférence spatiale avec la scène sonore ajustée du signal audio d'entrée.

9.  Appareil selon la revendication 8, dans lequel le signal audio d'entrée comprend un signal stéréo bicanal, et dans lequel le processus de panning d'amplitude comprend le mixage des canaux gauche et droit du signal stéréo de façon à accroître la similarité entre les canaux gauche et droit.

**10.** Appareil selon la revendication 9, dans lequel l'étendue spatiale de la scène sonore est modifiée de façon à permettre l'insertion d'un signal additionnel de chaque côté de la scène sonore ajustée.

**11.** Appareil selon la revendication 8, dans lequel ladite suppression de la composante audio de canal central (C) et ladite insertion de la source sonore additionnelle (S) sont conçues pour être réalisées proportionnellement l'une à l'autre.

**12.** Appareil selon la revendication 11, dans lequel le mixage des canaux gauche et droit du signal stéréo est réalisé d'une manière variable dans le temps.

**13.** Appareil selon la revendication 12, dans lequel, s'il est déterminé qu'il convient d'insérer une source sonore additionnelle ($S_1$, $S_2$, S) dans la scène sonore produite par le signal stéréo bicanal ($L_{in}$, $R_{in}$), l'au moins une mémoire et l'au moins un code de programme d'ordinateur enregistré sont configurés en outre pour, à l'aide de l'au moins un processeur, amener l'appareil à au moins :

mixer les canaux gauche et droit du signal stéréo d'une manière variable dans le temps au sein d'une première période prédéfinie, par exemple une seconde.

**14.** Produit-programme d'ordinateur, enregistré sur un support lisible par ordinateur et exécutable dans un dispositif de traitement de données, destiné à traiter des signaux audio, le produit-programme d'ordinateur comprenant :

un code de programme d'ordinateur destiné à mettre en oeuvre le procédé selon l'une quelconque des revendications 1 à 7.

Fig.1a

Fig.1b

Fig. 2a

Fig.2b

$S_1$

$S_2$

S1

S2

$L_{in}$

$R_{in}$

Amplitude
panning

300

Spatial
processing

302

L

R

Fig. 3

L-C/2    C    R-C/2

Fig. 4a

L-C/2    S    R-C/2

Fig. 4b

Fig. 5

Fig. 6a

Fig. 6b

Fig. 7

**EP 2 540 101 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070286426 A
- WO 2007143373 A
- US 20080170703 A
- US 20090136044 A
- US 20080298610 A